# EUROPÄISCHE PATENTANMELDUNG

(11) **EP 4 570 382 A1**
(43) Veröffentlichungstag der Anmeldung: **18.06.2025**
(21) Anmeldenummer: 23216365.9
(22) Anmeldetag: 13.12.2023
(51) Int. Cl.: B03C 1/023, B03B 5/28, B03C 1/30, B03C 7/00, B03C 7/08, B29B 17/02

(54) **VERFAHREN UND VORRICHTUNG ZUR TRENNUNG VON TEILCHEN, DIE KUNSTSTOFFTEILCHEN VERSCHIEDENER ZUSAMMENSETZUNGEN UMFASSEN**

(71) Anmelder: D&G Recycling GmbH, 86720 Nördlingen (DE)
(72) Erfinder: Deinert, Dr. Jürgen, 37115 Duderstadt (DE); Egert, Gordon, 37115 Duderstadt (DE)
(74) Vertreter: REHBERG HÜPPE + PARTNER

(57) **Zusammenfassung**

Zur Trennung von Teilchen (5), die Kunststoffteilchen (25) verschiedener Zusammensetzungen umfassen, werden die Teilchen (5), die zuvor mit einer Flüssigkeit (11) in Kontakt standen, einer Trocknung (13) unterworfen, um die Flüssigkeit (11) von ihnen zu entfernen. Nach der Trocknung (13) werden die Teilchen (5) einer elektrostatischen Aufladung (19) unterworfen; und nach der elektrostatischen Aufladung (19) werden die Teilchen (5) abhängig von ihren spezifischen elektrostatischen Ladungen und/oder elektrischen Leitfähigkeiten in verschiedene Fraktionen (22-24) aufgeteilt. Dabei weisen die Teilchen (5) einer Fraktion (22) der verschiedenen Fraktionen (22-24) keine elektrostatischen Ladungen auf. Zumindest ein Teil der einen Fraktion (22), deren Teilchen (5) nach der elektrostatischen Aufladung (19) keine elektrostatischen Ladungen aufweisen, wobei der Teil von der Flüssigkeit (11) restfeuchte Kunststoffteilchen (25') umfasst, wird erneut einer Trocknung (13) und einer nachfolgenden elektrostatischen Aufladung (19) unterworfen und dann abhängig von den spezifischen elektrostatischen Ladungen und/oder elektrischen Leitfähigkeiten seiner Teilchen (5) in die verschiedenen Fraktionen (22-24) aufgeteilt.

## Beschreibung

### TECHNISCHES GEBIET DER ERFINDUNG

Die Erfindung bezieht sich auf ein Verfahren und eine Vorrichtung zur Trennung von Teilchen, die Kunststoffteilchen verschiedener Zusammensetzungen umfassen. Genauer bezieht sich die Erfindung auf ein Verfahren mit den Merkmalen des Oberbegriffs des unabhängigen Patentanspruchs 1 und eine Vorrichtung zur Durchführung eines solchen Verfahrens mit den Merkmalen des Oberbegriffs des Patentanspruchs 13.

### STAND DER TECHNIK

Zur Trennung von Teilchen, die Kunststoffteilchen verschiedener Zusammensetzungen umfassen, ist die Verwendung eines sogenannten elektrostatischen Separators bekannt. In einem elektrostatischen Separator werden die Teilchen, beispielsweise mittels einer elektrischen Entladung, elektrostatisch aufgeladen und dann abhängig von ihren spezifischen elektrostatischen Ladungen und/oder elektrischen Leitfähigkeiten in verschiedene Fraktionen aufgeteilt.

Es ist bekannt, dass der Feuchtegehalt von Kunststoffteilchen einen erheblichen Einfluss auf deren elektrostatische Aufladbarkeit hat. Daher sind Kunststoffteilchen umfassende Teilchen, die mit einer Flüssigkeit in Kontakt standen, vor ihrer Trennung in einem elektrostatischen Separator zu trocknen. Dies gilt beispielsweise und insbesondere dann, wenn die Teilchen zuvor in der Flüssigkeit suspendiert wurden, um sie mit Hilfe dieser Flüssigkeit hinsichtlich ihrer Dichte zu unterscheiden. Die Trocknung aller Kunststoffteilchen muss typischerweise bis herab auf maximal 0,2 Gewichtsprozent Restfeuchte erfolgen, damit sie anschließend mit einem elektrostatischen Separator hinsichtlich ihrer Zusammensetzungen getrennt werden können. Damit alle in den Teilchen enthaltenen Kunststoffteilchen diese geringe Restfeuchte aufweisen, erfordert das Trocknen der Teilchen eine lange Trocknungszeit und/oder einen großen Energieeinsatz.

Ein Verfahren mit den Merkmalen des Oberbegriffs des unabhängigen Patentanspruchs 1 und eine entsprechende Vorrichtung mit den Merkmalen des Oberbegriffs des Patentanspruchs 13 sind aus der DE 20 2021 000 353 U1 bekannt.

### AUFGABE DER ERFINDUNG

Der Erfindung liegt die Aufgabe zugrunde, ein Verfahren zur Trennung von Teilchen, die Kunststoffteilchen verschiedener Zusammensetzungen umfassen, mit den Merkmalen des Oberbegriffs des unabhängigen Patentanspruchs 1 und eine Vorrichtung zur Durchführung eines solchen Verfahrens mit den Merkmalen des Oberbegriffs des Patentanspruchs 13 aufzuzeigen, die einen reduzierten Energiebedarf für das Trocknen der Teilchen aufweisen.

### LÖSUNG

Erfindungsgemäß wird die Aufgabe durch ein Verfahren mit den Merkmalen des unabhängigen Patentanspruchs 1 und eine Vorrichtung mit den Merkmalen des Patentanspruchs 13 gelöst. Bevorzugte Ausführungsformen des erfindungsgemäßen Verfahrens sind in den Patentansprüchen 2 bis 12 und bevorzugte Ausführungsformen der erfindungsgemäßen Vorrichtung in den Patentansprüchen 14 und 15 definiert.

### BESCHREIBUNG DER ERFINDUNG

Bei dem erfindungsgemäßen Verfahren zur Trennung von Teilchen, die Kunststoffteilchen verschiedener Zusammensetzungen umfassen, werden die Teilchen, die zuvor mit einer Flüssigkeit in Kontakt standen, einer Trocknung unterworfen, um die Flüssigkeit von ihnen zu entfernen. Nach der Trocknung werden die Teilchen einer elektrostatischen Aufladung unterworfen. Anschließend werden die Teilchen abhängig von ihren spezifischen elektrostatischen Ladungen und/oder elektrischen Leitfähigkeiten in verschiedene Fraktionen aufgeteilt, wobei die Teilchen einer der verschiedenen Fraktionen keine elektrostatischen Ladungen aufweisen. Zumindest ein Teil dieser einen Fraktion, deren Teilchen keine elektrostatischen Ladungen aufweisen, wobei der Teil von der Flüssigkeit restfeuchte Kunststoffteilchen umfasst, wird erneut einer Trocknung und einer folgenden elektrostatischen Aufladung unterworfen und dann abhängig von den spezifischen elektrostatischen Ladungen und/oder elektrischen Leitfähigkeiten seiner Teilchen in die verschiedenen Fraktionen aufgeteilt.

Mit elektrostatischen Ladungen sind hier die sich aus der Summe der positiven und negativen elektrostatischen Ladungen ergebenden Nettoladungen der Teilchen gemeint. Dass ein Teilchen keine elektrostatische Ladung aufweist, schließt den Fall ein, dass die elektrostatische Ladung des Teilchens so klein ist, dass sich das Teilchen im Rahmen des erfindungsgemäßen Verfahrens nicht von einem Teilchen unterscheidet, das eine elektrostatische Ladung von exakt null aufweist.

In der einen Fraktion, deren Teilchen keine elektrostatischen Ladungen aufweisen, die also erst gar nicht elektrostatisch aufgeladen wurden oder ihre elektrostatischen Ladungen schnell wieder verloren haben, finden sich die Kunststoffteilchen, deren Restfeuchte zu hoch ist, um sie elektrostatisch aufzuladen. Diese restfeuchten Kunststoffteilchen können daher nicht aufgrund ihrer Kunststoffzusammensetzung und der daraus resultierenden dielektrischen Eigenschaften von anderen Teilchen getrennt werden. Bei dem erfindungsgemäßen Verfahren wird zumindest ein Teil der einen Fraktion, deren Teilchen keine elektrostatischen Ladungen aufweisen, und zwar eben der Teil, der die von der Flüssigkeit restfeuchten Kunststoffteilchen umfasst, erneut einer Trocknung und einer folgenden elektrostatischen Aufladung unterworfen und dann abhängig von den spezifischen elektrostatischen Ladungen und/oder elektrischen Leitfähigkeiten seiner Teilchen in die verschiedenen Fraktionen aufgeteilt. Dies kann auf einfache Weise dadurch realisiert werden, dass dieser Teil der einen Fraktion zu den Teilchen hinzugefügt werden, die erstmals einer Trocknung unterworfen werden. Bei der erneuten Trocknung reduziert sich die Restfeuchte der Kunststoffteilchen, die beim ersten Aufteilen in die Fraktionen keine elektrostatischen Ladungen aufwiesen, weil ihre Restfeuchte noch zu hoch war. Die reduzierte Restfeuchte kann dazu führen, dass diese Kunststoffteilchen bei der folgenden elektrostatischen Aufladung so weit und so dauerhaft elektrostatisch aufgeladen werden, dass sie nicht erneut in die eine Fraktion, deren Kunststoffteilchen keine elektrostatischen Ladungen aufweisen, sondern abhängig von ihrer Kunststoffzusammensetzung und den daraus resultierenden dielektrischen Eigenschaften in eine andere Fraktion gelangen.

Bei dieser Vorgehensweise kann die Trocknung, der alle Teilchen zumindest einmal unterworfen werden, relativ schnell und mit einem relativ geringen Einsatz an Energie durchgeführt werden. Dabei wird in Kauf genommen, dass nicht einmal annähernd alle enthaltenen Kunststoffteilchen auf die für eine elektrostatische Separation ausreichende Restfeuchte getrocknet werden. Stattdessen wird dafür gesorgt, dass möglichst selektiv die noch restfeuchten Kunststoffteilchen einer erneuten Trocknung unterworfen werden, also nur für diese restfeuchten Teilchen zusätzliche Energie zur Trocknung aufgewandt wird. Weil bei der Trocknung, der alle Teilchen unterwerfen werden, auf diese Weise sehr viel Energie eingespart werden kann, wird selbst dann ein hoher energetischer Vorteil erzielt, wenn einige der Teilchen mehr als zweimal einer Trocknung unterworfen werden, selbst wenn diese Teilchen nicht sämtlich restfeuchte Kunststoffteilchen sind, sondern aufgrund anderer Eigenschaften in die Fraktion gelangen, deren Teilchen keine elektrostatischen Ladungen aufweisen.

Die Fraktion, deren Teilchen keine elektrostatischen Ladungen aufweisen, umfasst neben Kunststoffteilchen mit hoher Restfeuchte an der Flüssigkeit auch Metallteilchen bzw. Kunststoffteilchen mit hohem Metallanteil und Kunststoffteilchen mit auf andere Weise elektrisch leitfähig gemachtem Kunststoff. Diese Teilchen können zwar teilweise elektrostatisch aufgeladen werden, verlieren ihre Ladungen dann aber sehr schnell wieder, so dass sie als Teilchen ohne elektrostatische Ladungen der einen Fraktion zugeschlagen werden.

Um von oder mit der einen Fraktion, deren Teilchen keine elektrostatischen Ladungen aufweisen, möglichst nur restfeuchte Kunststoffteilchen erneut einer Trocknung und den sich daran anschließenden Verfahrensschritten zu unterwerfen, können ferromagnetische und/oder elektrisch leitfähige Teilchen abgetrennt werden, bevor der Teil der einen Fraktion erneut einer Trocknung unterworfen wird. Die ferromagnetischen und/oder elektrisch leitfähigen Teilchen können erst dann, wenn die eine Fraktion abgeteilt ist, und/oder vorher von den Teilchen abgetrennt werden.

Ferromagnetische Teilchen, zu denen ferromagnetisch gemachte Kunststoffteilchen ebenso zählen wie ferromagnetische Metallteilchen, können beispielsweise mit Hilfe eines Elektromagneten abgetrennt werden. Dies entspricht der Funktionsweise eines grundsätzlich bekannten, sogenannten Magnetabscheiders.

Elektrisch leitfähigen Teilchen können beispielsweise abgetrennt werden, indem Wirbelströme in den elektrisch leitfähigen Teilchen induziert werden. Die Wirbelströme erzeugen ein Magnetfeld, so dass die elektrisch leitfähigen Teilchen durch Wechselwirkung mit einem externen Magnetfeld von anderen, d. h. nicht elektrisch leitfähigen Teilchen weg beschleunigt werden. Dies entspricht der Funktionsweise eines grundsätzlich bekannten, sogenannten Wirbelstromabscheiders. Im einfachsten Fall werden die Teilchen in Querrichtung zu den Feldlinien durch ein Magnetfeld bewegt, wobei selektiv die elektrischen leitfähigen Teilchen nach dem Prinzip einer Wirbelstrombremse abgebremst werden. Die Abtrennung der ferromagnetischen und der elektrisch leitfähigen Teilchen kann grundsätzlich zeitgleich, d. h. beispielsweise mit Hilfe eines selben Elektromagneten erfolgen.

Weiterhin können Teilchen von der einen Fraktion oder schon vorher abgetrennt werden, die eine andere elektrische Polarisierbarkeit aufweisen als von der Flüssigkeit restfeuchte Kunststoffteilchen, bevor zumindest der Teil der einen Fraktion erneut einer Trocknung unterworfen wird. Dies kann dadurch realisiert werden, dass die Teilchen durch ein inhomogenes externes elektrisches Feld bewegt werden, um die Teilchen abhängig von ihrer elektrischen Polarisierbarkeit durch Wechselwirkung mit dem inhomogenen externen elektrischen Feld unterschiedlich abzulenken. Durch das externe elektrische Feld wird eine elektrische Polarisierung der Teilchen hervorgerufen, die auch davon abhängig ist, ob es sich bei den Teilchen um restfeuchte Kunststoffteilchen handelt. Abhängig von der hervorgerufenen Polarisierung übt das inhomogene externe elektrische Feld, in dem die Feldstärke einen ausgeprägten Gradienten aufweist, unterschiedliche Kräfte auf die Teilchen aus. Diese unterschiedlichen Kräfte lenken die durch das inhomogene externe elektrische Feld bewegten Teilchen unterschiedlich ab. So können die restfeuchten Kunststoffteilchen, die sinnvoller Weise erneut einer Trocknung unterworfen werden, weiter selektiert werden. Die Abtrennung aufgrund einer anderen Polarisierbarkeit kann zeitgleich mit der Abtrennung von ferromagnetischen und/oder der elektrisch leitfähigen Teilchen, d. h. innerhalb einer kombinierten Abscheideeinrichtung, erfolgen

Bei dem erfindungsgemäßen Verfahren können die restfeuchten Kunststoffteilchen, die den Teil der einen Fraktion, der erneut einer Trocknung unterworfen wird, möglichst vollständig ausbilden, besonders leicht selektiert werden, wenn die Teilchen, insbesondere bereits bevor sie mit der Flüssigkeit in Kontakt gebracht werden, mit einer Genauigkeit von +/- 1,5 mm oder besser auf eine Teilchengröße im Bereich von 1 mm bis 10 mm eingestellt werden. Auf diese Weise haben die Teilchen z. B. zumindest annähernd gleich große spezifische Oberflächen, die mit der Flüssigkeit benetzt werden, die wieder getrocknet werden müssen und an denen die Teilchen elektrostatisch aufgeladen werden können.

Die Teilchen können mit der Flüssigkeit in Kontakt gebracht werden, indem sie in der Flüssigkeit suspendiert werden, um sie aufgrund ihrer Dichte von anderen Teilchen zu trennen. Stattdessen oder zusätzlich können die Teilchen mit der Flüssigkeit in Kontakt gebracht werden, um die Teilchen mit der Flüssigkeit zu waschen. Außerdem können die Teilchen bei einer Lagerung im Freien oder anderweitig unbeabsichtigt mit der Flüssigkeit in Kontakt gekommen sein.

Die Teilchen können der Trocknung unterworfen werden, indem sie und die Flüssigkeit, beispielsweise durch Konvektion und/oder Infrarotstrahlung, erwärmt werden, um die Flüssigkeit zu verdampfen. Alternativ oder zusätzlich können die Teilchen der Trocknung unterworfen werden, indem sie und die Flüssigkeit mit trockener Luft angeströmt werden, die die verdampfende Flüssigkeit aufnimmt und abführt. Weiterhin kann ein Druck in der Umgebung der Teilchen reduziert werden, um das Verdampfen der Flüssigkeit zu fördern. Zudem kann anhaftende Flüssigkeit zu Beginn der Trocknung beispielsweise durch Absaugen oder Abschleudern und ohne Verdampfen von den Teilchen entfernt werden.

Um die Teilchen der elektrostatischen Aufladung zu unterwerfen, können sie aneinander gerieben werden und/oder einer elektrischen Entladung ausgesetzt werden. Dem Fachmann sind noch weitere Möglichkeiten der elektrostatischen Aufladung von Teilchen bekannt.

Nach der elektrostatischen Auflandung können die Teilchen mit einem geerdeten metallischen Förderer gefördert werden. Dann fällt die eine Fraktion, deren Teilchen keine elektrostatischen Ladungen aufweisen, von einem vorderen Ende des Förderers herab. Die Teilchen dieser Fraktion umfassen, wie bereits angedeutet wurde, nicht nur Teilchen, die gar nicht elektrostatisch aufgeladen wurden, sondern auch Teilchen, die ihre Ladungen durch Kontakt mit dem geerdeten metallischen Förderer wieder verlieren.

Mit einem in einem freien Abstand oberhalb des geerdeten metallischen Förderers angeordneten weiteren dielektrischen Förderer, der also insbesondere an seiner Oberfläche aus einem Dielektrikum ausgebildet ist, können Kunststoffteilchen mit großen spezifischen elektrostatischen Ladungen und geringen elektrischen Leitfähigkeiten abgefördert werden. Diese Kunststoffteilchen werden von dem dielektrischen Förderer von dem geerdeten metallischen Förderer weg angezogen und dann an dessen Oberfläche anhaftend abtransportiert.

Eine erfindungsgemäße Vorrichtung zur Durchführung des erfindungsgemäßen Verfahrens weist einen Trockner auf, der konfiguriert ist, um die Teilchen, welche zuvor mit der Flüssigkeit in Kontakt standen, der Trocknung zu unterwerfen. Eine Aufladeeinrichtung der Vorrichtung ist konfiguriert und angeordnet, um die Teilchen nach der Trocknung in dem Trockner einer elektrostatischen Aufladung zu unterwerfen; und eine Fraktioniereinrichtung der Vorrichtung ist konfiguriert und angeordnet, um die Teilchen nach der elektrostatischen Aufladung in der Aufladeeinrichtung abhängig von ihren spezifischen elektrostatischen Ladungen und/oder elektrischen Leitfähigkeiten in verschiedene Fraktionen aufzuteilen, wobei die Teilchen einer der verschiedenen Fraktionen keine elektrostatischen Ladungen aufweisen. Weiterhin weist die erfindungsgemäße Vorrichtung eine Rückführeinrichtung auf, die konfiguriert und angeordnet ist, um zumindest einen Teil der einen Fraktion, deren Teilchen keine elektrostatischen Ladungen aufweisen, wobei der Teil restfeuchte Kunststoffteilchen umfasst, zurück in den Trockner oder in einen weiteren Trockner zu führen, der an die Aufladeeinrichtung angeschlossen ist, um den Teil der einen Fraktion erneut einer Trocknung und einer folgenden elektrostatischen Aufladung mit anschließender Aufteilung in die verschiedenen Fraktionen zu unterwerfen.

Die Vorrichtung kann weiterhin einen Metallabscheider aufweisen, der konfiguriert und angeordnet ist, um ferromagnetische und/oder elektrisch leitfähige Teilchen von der einen Fraktion abzutrennen, bevor der Teil der einen Fraktion der weiteren Trocknung unterworfen wird. Dieser Metallabscheider kann einen Elektromagneten und/oder einen Wirbelstromabscheider aufweisen.

Weiterhin kann die Vorrichtung eine Abscheideeinrichtung aufweisen, die konfiguriert und angeordnet ist, um Teilchen von der einen Fraktion abzutrennen, die eine andere elektrische Polarisierbarkeit aufweisen als die von der Flüssigkeit restfeuchten Kunststoffteilchen, bevor der Teil der einen Fraktion der weiteren Trocknung unterworfen wird. Die Abscheideeinrichtung kann ein inhomogenes elektrisches Feld generieren, um die Teilchen abhängig von ihrer elektrischen Polarisierbarkeit durch Wechselwirkung mit dem inhomogenen externen elektrischen Feld unterschiedlich stark abzulenken. Praktisch kann diese Abscheideeinrichtung mit einem Metallabscheider zu einer Abscheideeinrichtung kombiniert sein.

Darüber hinaus kann die Vorrichtung einen Zerkleinerer und eine Klassiereinrichtung aufweisen, die ausgebildet und angeordnet sind, um die Teilchen, bevor sie mit der Flüssigkeit in Kontakt gebracht werden, mit einer Genauigkeit von mindestens +/- 1,5 mm und besser mindestens +/-1,0 mm auf eine Teilchengröße im Bereich von 1 mm bis 10 mm einzustellen.

Darüber hinaus kann ein Schwerkraftabscheider vorgesehen sein, der ausgebildet ist, um die in der Flüssigkeit suspendierten Teilchen aufgrund ihrer Dichte von anderen Teilchen zu trennen.

Alternativ oder zusätzlich kann eine Wascheinrichtung vorgesehen sein, die ausgebildet ist, um die Teilchen mit der oder einer weiteren Flüssigkeit zu waschen.

Weitere bevorzugte Ausführungsformen der erfindungsgemäßen Vorrichtung ergeben sich aus den bevorzugten Ausführungsformen des erfindungsgemäßen Verfahrens.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Fraktioniereinrichtung die Rede ist, ist dies so zu verstehen, dass genau eine Fraktioniereinrichtung, zwei Fraktioniereinrichtungen oder mehr Fraktioniereinrichtungen vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Ablaufdiagramm einer Ausführungsform des erfindungsgemäßen Verfahrens und zeigt zugleich einen Aufbau der erfindungsgemäßen Vorrichtung; und
- **Fig. 2**: illustriert einen konkrete Ausführungsform eines elektrostatischen Separators zur Verwendung bei dem Verfahren und der Vorrichtung gemäß Fig. 1.

### FIGURENBESCHREIBUNG

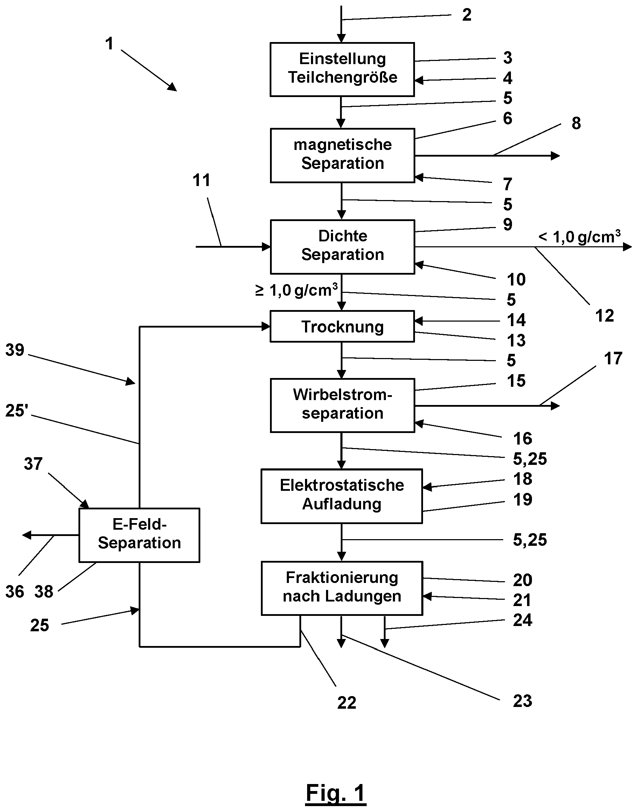

**Fig. 1** illustriert eine Ausführungsform des erfindungsgemäßen Verfahrens und zugleich den Aufbau einer erfindungsgemäßen Vorrichtung 1. Ein Ausgangsmaterial 2 besteht aus Objekten unterschiedlicher Größe und unterschiedlicher Zusammensetzung. In einer Einstellung 3 einer Teilchengröße wird mit Hilfe eines Zerkleinerers und einer Klassiereinrichtung 4 das Ausgangsmaterial 2 auf eine einheitliche Teilchengröße eingestellt. Der Zerkleinerer kann ein Mahlwerk aufweisen, und die Klassiereinrichtung kann mit Sieben arbeiten. Die resultierenden Teilchen 5 weisen eine möglichst einheitliche Größe im Bereich von 1 bis 10 mm mit einer Genauigkeit von mindestens +/- 1,5 mm auf. In einer magnetischen Separation 6 in einem Magnetabscheider 7 werden ferromagnetische Teilchen 8 von den Teilchen 5 abgetrennt. Die ferromagnetischen Teilchen 8 umfassen neben ferromagnetischen Metallteilchen auch Teilchen 5 aus Kunststoffen, die durch einen Zuschlag von ferromagnetischen Metallpartikeln ferromagnetisch gemacht sind.

In einer nachfolgenden Dichteseparation 9 in einem Schwerkraftabscheider 10 werden die Teilchen 5 in einer Flüssigkeit 11, beispielsweise Wasser, in Teilchen unterschiedlicher Dichte aufgeteilt, wobei im vorliegenden Beispiel aufschwimmende Teilchen 12 mit einer Dichte kleiner als 1 g/cm³ abgeteilt und anderweitig weiterbehandelt werden. Die verbleibenden Teilchen 5 werden einer Trocknung 13 in einen Trockner 14 unterworfen. Durch Wirbelstromseparation 15 in einem Wirbelstromabscheider 16 werden elektrisch leitfähige Teilchen 17 entfernt. Die elektrisch leitfähigen Teilchen 17 umfassen neben nicht ferromagnetischen Metallteilchen auch Teilchen aus elektrisch leitfähigen Kunststoffen. Die verbleibenden Teilchen 5 sind im Wesentlichen Kunststoffteilchen 25 und werden in einer Aufladeeinrichtung 18 einer elektrostatischen Aufladung 19 unterworfen, so dass sie sich, soweit dies möglich ist, elektrostatisch aufladen. Hieran schließt sich eine Fraktionierung 20 der Teilchen 5 abhängig von ihren elektrostatischen Ladungen in einer Fraktioniereinrichtung 21 an.

Die dabei anfallenden Faktionen 22 bis 24 der Teilchen 5 umfassen eine Fraktion 22, in die restfeuchte Kunststoffteilchen 25' fallen, die aufgrund ihrer Restfeuchte an Flüssigkeit 11 in der elektrostatischen Aufladung 19 nicht elektrostatisch aufladbar waren oder aufgrund ihrer Restfeuchte ihre Ladungen schnell wieder verloren haben. Wenn der elektrostatischen Aufladung 19 keine Wirbelstromseparation 15 vorgeschaltet ist, fallen auch die elektrisch leitfähigen Teilchen 17, und wenn keine magnetische Separation 6 vorgeschaltet ist, fallen auch die ferromagnetischen Teilchen 8, zumindest soweit es sich zugleich um elektrisch leitfähige Teilchen handelt, in die Fraktion 22. In diesen Fällen können die elektrisch leitfähigen Teilchen 17 und/oder die magnetischen Teilchen 8 mit einem Magnetabscheider 7 bzw. einem Wirbelstromabscheider 16 von der Fraktion 22 abgetrennt werden.

Bevor die Kunststoffteilchen 25 der Fraktion 22 von einer Rückführeinrichtung 39 zurück zu der Trocknung 13 in dem Trockner 14 geführt werden, können zudem als solche nicht elektrostatisch aufladbaren Kunststoffteilchen 36 von den Kunststoffteilchen 25 der Fraktion 22 in einem E-Feld-Abscheider 37 mittels Separation 38 in einem elektrischen Feld mit ausgeprägtem Gradienten der elektrischen Feldstärke abgetrennt werden. Die Abtrennung der als solche nicht elektrostatisch aufladbaren Kunststoffteilchen 36 von den restfeuchten Kunststoffteilchen 25' erfolgt dabei aufgrund ihrer Polarisationseigenschaften. Diese Separation 38 kann genauso wie die Wirbelstromseparation 15 und die magnetische Separation 6 bereits zu einem früheren Zeitpunkt erfolgen, insbesondere aber nach der Wirbelstromseparation 15 und der magnetischen Separation 6, so dass sie zumindest im Wesentlichen nur als solche nicht elektrostatisch aufladbare Kunststoffteilchen 36 abtrennt. Von der Fraktion 22 werden möglichst nur die restfeuchten Kunststoffteilchen 25' zurück zu der Trocknung 13 in dem Trockner 14 geführt. Die in dem Trockner 14 erfolgende weitere Trocknung 13 dient dazu, die Restfeuchte der restfeuchten Kunststoffteilchen 25' soweit zu reduzieren, dass bei der sich anschließenden neuerlichen elektrostatischen Aufladung 19 eine Aufladung aufgrund der Zusammensetzung der Kunststoffteilchen 25 erfolgt, so dass ihre anschließende Auftrennung in die Fraktionen 23 und 24 ebenfalls aufgrund der Zusammensetzung der Kunststoffteilchen 25 erfolgen kann.

Durch die Rückführung der restfeuchten Kunststoffteilchen 25' zu der Trocknung 13 kann die Trocknung 13 so eingestellt werden, dass sie nicht bei allen einmal durchlaufenden Teilchen 5 eine Restfeuchte von 0,2 Gewichtsprozent einstellt, wie sie typischerweise für eine erfolgreiche elektrostatische Separation durch elektrostatische Aufladung 19 und anschließende Fraktionierung 20 abhängig von den spezifischen elektrostatischen Ladungen und/oder elektrischen Leitfähigkeiten der Kunststoffteilchen 25 erforderlich ist. Vielmehr kann die Trocknung 13 hinsichtlich ihres Energiebedarfs optimiert werden, wobei bewusst in Kauf genommen wird, dass beim einmaligen Durchlauf durch die Trocknung 13 ein größerer Anteil der Teilchen 5 nicht die Restfeuchte von 0,2 Gewichtsprozent erreicht. Zumindest soweit es sich dabei um Kunststoffteilchen 25 handelt, werden diese jedoch als restfeuchte Kunststoffteilchen 25' bei der Fraktionierung 20 in der Fraktion 22 aufgefangen und zu der Trocknung 13 zurückgeführt. Praktisch kann auf diese Weise eine erhebliche Einsparung an Energie für die Trocknung von mindestens 10 %, in einigen Fällen auch von mindestens 20 % erreicht werden, was für die Wirtschaftlichkeit des Gesamtverfahrens von erheblicher Bedeutung ist.

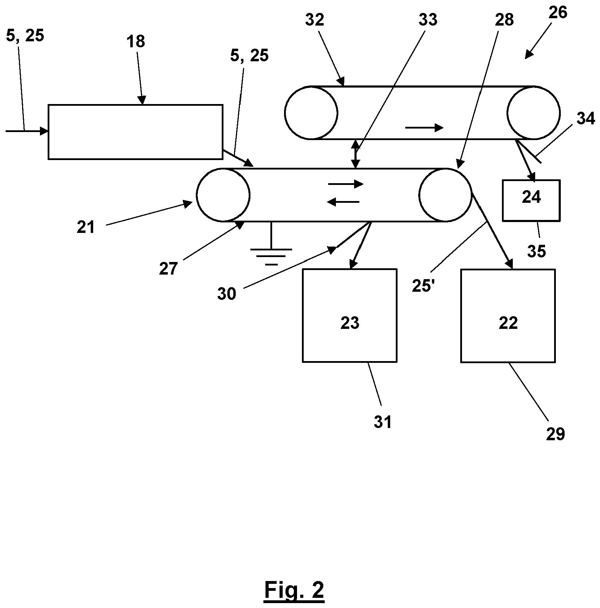

**Fig. 2** illustriert eine konkrete Ausführungsform eines elektrostatischen Separators 26. Der elektrostatische Separator 26 umfasst die Aufladeeinrichtung 18 für die elektrostatische Aufladung 19 der Teilchen 5 in Form von Kunststoffteilchen 25. Die Aufladeeinrichtung 18 kann zum Beispiel eine in einem Mantel aus dielektrischem Material umlaufende Förderschnecke aufweisen, die ebenfalls aus dielektrischem Material besteht, so dass die Teilchen 5 in der Aufladeeinrichtung 18 aneinander reiben und sich so elektrostatisch aufladen. Eine elektrostatische Aufladung 19 der Teilchen 5 durch Reibung kann auch in einem Vibrationsförderer oder in einem Materialwirbelstrom hervorgerufen werden. Alternativ kann die Aufladeeinrichtung 18 die Teilchen 5 einer elektrischen Entladung einer Hochspannung aussetzen, um die Teilchen 5 elektrostatisch aufzuladen. Die soweit als möglich elektrostatisch aufgeladenen Teilchen 5 gelangen auf ein metallisches Förderband 27 der Fraktionierungseinrichtung 21, welches geerdet ist. Auf diesem Förderband 27 verlieren alle elektrisch leitfähigen Teilchen 5 ihre Ladungen. So fallen elektrisch leitfähige Teilchen vom vorderen Ende 28 des Förderbands 27 in einen Behälter 29 für die Fraktion 22 herab.

Genauso fallen die restfeuchten Kunststoffpartikel 25' in den Behälter 29, weil diese entweder gar nicht in der Aufladeeinrichtung 18 elektrostatisch aufgeladen wurden oder ihre Ladungen ebenfalls auf dem geerdeten metallischen Förderband 27 wieder verloren haben. Auch aus anderen Gründen nicht elektrostatisch aufladbare Kunststoffteilchen 25 gelangen in die Fraktion 22. Die nächste Fraktion 23 der Teilchen haftet aufgrund deren spezifischen elektrostatischen Ladungen an der Unterseite des geerdeten metallischen Förderbands 27 an und wird von dort mit einer Bürsteneinrichtung 30 in einen Behälter 31 abgebürstet. Auf besonders große spezifische elektrostatische Ladungen aufgeladene Teilchen werden von einem Förderband 32 aus einem Dielektrikum, das in einem freien Abstand 33 oberhalb des Förderbands 27 angeordnet ist, nach oben von dem Förderband 27 weg angezogen und mit einer Bürsteneinrichtung 34 von diesem in einen Behälter 35 für die Fraktion 24 abgebürstet. So gelangen Kunststoffteilchen 25 aus Silikon in die Fraktion 24. Andere elektrostatisch aufladbare Kunststoffteilchen 25 finden sich hingegen in der Fraktion 23. Statt mit Bürsteneinrichtungen 30 und 34 können die jeweiligen elektrostatisch aufgeladenen Teilchen 5 auch durch Anlegen eines elektrischen Felds von dem jeweiligen Förderband 27 bzw. 32 abgenommen werden.

### BEZUGSZEICHENLISTE

- 1: Vorrichtung
- 2: Ausgangsmaterial
- 3: Einstellung Teilchengröße
- 4: Zerkleinerer und Klassiereinrichtung
- 5: Teilchen
- 6: magnetische Separation
- 7: Magnetabscheider
- 8: ferromagnetische Teilchen
- 9: Dichteseparation
- 10: Schwerkraftabscheider
- 11: Flüssigkeit
- 12: leichte Teilchen
- 13: Trocknung
- 14: Trockner
- 15: Wirbelstromseparation
- 16: Wirbelstromabscheider
- 17: elektrisch leitfähige Teilchen
- 18: Aufladeeinrichtung
- 19: elektrostatische Aufladung
- 20: Fraktionierung nach spezifischen elektrostatischen Ladungen
- 21: Fraktionierungseinrichtung
- 22: Fraktion
- 23: Fraktion
- 24: Fraktion
- 25: Kunststoffteilchen
- 25': restfeuchte Kunststoffteilchen
- 26: elektrostatischer Separator
- 27: metallisches Förderband
- 28: vorderes Ende des Förderbands 27
- 29: Behälter für die Fraktion 22
- 30: Bürsteneinrichtung
- 31: Behälter für die Fraktion 23
- 32: Förderband aus Dielektrikum
- 33: Abstand
- 34: Bürsteneinrichtung
- 35: Behälter für die Fraktion 24
- 36: nicht elektrostatisch aufladbare Kunststoffteilchen
- 37: E-Feld-Abscheider
- 38: Separation durch elektrisches Feld mit Gradient der elektrischen Feldstärke
- 39: Rückführeinrichtung

## Patentansprüche

1. Verfahren zur Trennung von Teilchen (5), die Kunststoffteilchen (25) verschiedener Zusammensetzungen umfassen,
- wobei die Teilchen (5), die zuvor mit einer Flüssigkeit (11) in Kontakt standen, einer Trocknung (13) unterworfen werden, um die Flüssigkeit (11) von ihnen zu entfernen,
- wobei die Teilchen (5) nach der Trocknung (13) einer elektrostatischen Aufladung (19) unterworfen werden und
- wobei die Teilchen (5) nach der elektrostatischen Aufladung (19) abhängig von ihren spezifischen elektrostatischen Ladungen und/oder elektrischen Leitfähigkeiten in verschiedene Fraktionen (22-24) aufgeteilt werden, wobei die Teilchen (5) einer Fraktion (22) der verschiedenen Fraktionen (22-24) keine elektrostatischen Ladungen aufweisen,
**dadurch gekennzeichnet, dass** zumindest ein Teil der einen Fraktion (22), deren Teilchen (5) nach der elektrostatischen Aufladung (19) keine elektrostatischen Ladungen aufweisen, wobei der Teil von der Flüssigkeit (11) restfeuchte Kunststoffteilchen (25') umfasst, erneut einer Trocknung (13) und einer nachfolgenden elektrostatischen Aufladung (19) unterworfen und dann abhängig von den spezifischen elektrostatischen Ladungen und/oder elektrischen Leitfähigkeiten seiner Teilchen (5) in die verschiedenen Fraktionen (22-24) aufgeteilt wird.

2. Verfahren nach Anspruch 1, **wobei,** bevor der Teil der einen Fraktion (22) erneut einer Trocknung (13) unterworfen wird, ferromagnetische und/oder elektrisch leitfähige Teilchen (8, 17) abgetrennt werden.

3. Verfahren nach Anspruch 2, **wobei** die elektrisch leitfähigen Teilchen (17) abgetrennt werden, indem Wirbelströme in den elektrisch leitfähigen Teilchen (5) induziert werden, sodass die elektrisch leitfähigen Teilchen (5) durch Wechselwirkung mit einem externen Magnetfeld von allen nicht elektrisch leitfähigen Teilchen (5) weg beschleunigt werden.

4. Verfahren nach einem der vorhergehenden Ansprüche, **wobei,** bevor der Teil der einen Fraktion (22) erneut einer Trocknung (13) unterworfen wird, Teilchen (36) abgetrennt werden, die eine andere elektrische Polarisierbarkeit aufweisen als von der Flüssigkeit (11) restfeuchte Kunststoffteilchen (25').

5. Verfahren nach Anspruch 4, **wobei** die Teilchen (5), die eine andere elektrische Polarisierbarkeit aufweisen als von der Flüssigkeit (11) restfeuchte Kunststoffteilchen (25'), abgetrennt werden, indem die Teilchen (5) durch ein inhomogenes elektrisches Feld bewegt werden, um die Teilchen (5) abhängig von ihrer elektrischen Polarisierbarkeit durch Wechselwirkung mit dem inhomogenen elektrischen Feld unterschiedlich stark abzulenken.

6. Verfahren nach einem der vorhergehenden Ansprüche, **wobei** die Teilchen (5), bevor sie mit der Flüssigkeit (11) in Kontakt gebracht werden, mit einer Genauigkeit von +/- 1,5 mm auf eine Teilchengröße im Bereich von 1 mm bis 10 mm eingestellt werden.

7. Verfahren nach einem der vorhergehenden Ansprüche, **wobei** die Teilchen (5) in der Flüssigkeit (11) suspendiert werden, um sie aufgrund ihrer Dichte von anderen Teilchen (5) zu trennen.

8. Verfahren nach einem der vorhergehenden Ansprüche, **wobei** die Teilchen (5) mit der Flüssigkeit (11) gewaschen werden.

9. Verfahren nach einem der vorhergehenden Ansprüche, **wobei** die Teilchen (5) der Trocknung (13) unterworfen werden, indem
- sie und die Flüssigkeit (11) erwärmt werden und/oder
- sie und die Flüssigkeit (11) mit trockener Luft angeströmt werden und/oder
- ein Gasdruck in ihrer Umgebung reduziert wird.

10. Verfahren nach einem der vorhergehenden Ansprüche, **wobei** die Teilchen (5) der elektrostatischen Aufladung (19) durch Reibung unterworfen werden und/oder indem sie einer elektrischen Entladung ausgesetzt werden.

11. Verfahren nach einem der vorhergehenden Ansprüche, **wobei** die Teilchen (5) nach der elektrostatischen Aufladung (19) mit einem geerdeten metallischen Förderer gefördert werden, wobei die Teilchen (5) der einen Fraktion (22), die keine elektrostatischen Ladungen aufweisen, von einem vorderen Ende (28) des Förderers herab fallen.

12. Verfahren nach einem der vorhergehenden Ansprüche, **wobei** mit einem weiteren dielektrischen Förderer, der in einem freien Abstand (33) oberhalb des geerdeten metallischen Förderers angeordnet ist, Kunststoffteilchen (25) mit hohen spezifischen elektrostatischen Ladungen und geringen elektrischen Leitfähigkeiten abgefördert werden.

13. Vorrichtung (1) zur Durchführung des Verfahrens nach einem der vorhergehenden Ansprüche mit
- einem Trockner (14), der konfiguriert ist, um Teilchen (5), welche zuvor mit Flüssigkeit (11) in Kontakt standen, einer Trocknung (13) zu unterwerfen,
- einer Aufladeeinrichtung (18), die konfiguriert und angeordnet ist, um die Teilchen (5) nach der Trocknung (13) in dem Trockner (14) einer elektrostatischen Aufladung (19) zu unterwerfen, und
- einer Fraktioniereinrichtung (21), die konfiguriert und angeordnet ist, um die Teilchen (5) nach der elektrostatischen Aufladung (19) in der Aufladeeinrichtung (18) abhängig von ihren spezifischen elektrostatischen Ladungen und/oder elektrischen Leitfähigkeiten in verschiedene Fraktionen (22-24) aufzuteilen, wobei die Teilchen (5) einer Fraktion (22) der verschiedenen Fraktionen (22-24) keine elektrostatischen Ladungen aufweisen,
**gekennzeichnet durch**
- eine Rückführeinrichtung (39), die konfiguriert und angeordnet ist, um zumindest einen Teil der einen Fraktion (22), deren Teilchen (5) keine elektrostatischen Ladungen aufweisen, wobei der Teil von der Flüssigkeit (11) restfeuchte Kunststoffteilchen (25') umfasst, zurück in den Trockner (14) oder in einen weiteren Trockner, der an die Aufladeeinrichtung angeschlossen ist, zu führen, um den Teil der einen Fraktion (22) erneut einer Trocknung (13), einer folgenden elektrostatischen Aufladung (19) und einer anschließenden Aufteilung in die verschiedenen Fraktionen (22-24) zu unterwerfen.

14. Vorrichtung (1) nach Anspruch 13, mit
- einem Abscheider, der konfiguriert und angeordnet ist, um ferromagnetische und/oder elektrisch leitfähige Teilchen (8, 17) abzutrennen, bevor der Teil der einen Fraktion (22) erneut einer Trocknung (13) unterworfen wird, und der vorzugsweise einen Magnetabscheider (7) und/oder einen Wirbelstromabscheider (16) aufweist, und/oder
- einem Abscheider, der konfiguriert und angeordnet ist, um Teilchen (36) abzutrennen, die eine andere elektrische Polarisierbarkeit als die restfeuchten Kunststoffteilchen (25') aufweisen, bevor der Teil der einen Fraktion (22) erneut einer Trocknung (13) unterworfen wird, und der vorzugsweise einen ein inhomogenes elektrisches Feld generierenden E-Feld-Abscheider (37) aufweist, um die Teilchen (5) abhängig von ihrer elektrischen Polarisierbarkeit durch Wechselwirkung mit dem inhomogenen elektrischen Feld unterschiedlich abzulenken.

15. Vorrichtung (1) nach Anspruch 13 oder 14, mit
- einem Zerkleinerer und einer Klassiereinrichtung (4), die ausgebildet und angeordnet sind, um die Teilchen (5), bevor sie mit der Flüssigkeit (11) in Kontakt gebracht werden, mit einer Genauigkeit von +/- 1,5 mm auf eine Teilchengröße im Bereich von 1 mm bis 10 mm einzustellen; und/oder
- einem Schwerkraftabscheider (10), der ausgebildet ist, um die in der Flüssigkeit (11) suspendierten Teilchen (5) aufgrund ihrer Dichte von anderen Teilchen (5) zu trennen, und/oder
- einer Wascheinrichtung, die ausgebildet ist, um die Teilchen (5) mit der Flüssigkeit (11) zu waschen.
